# EUROPEAN PATENT APPLICATION

(11) **EP 4 787 856 A2**
(43) Date of publication of application: **05.08.2026**
(21) Application number: 26185776.7
(22) Date of filing: 31.12.2019
(51) Int. Cl.: H04N 19/513

(54) **VIDEO PROCESSING METHOD AND APPARATUS**

(30) Priority: 03.01.2019 WO PCT/CN2019/070306
(62) Divisional of application: 19907744.7
(71) Applicant: SZ DJI Technology Co., Ltd., Shenzhen, Guangdong 518057 (CN)
(72) Inventor: ZHENG, Xiaozhen, Shenzhen, 518057 (CN); WANG, Suhong, Beijing, 100871 (CN); MA, Siwei, Beijing, 100871 (CN); WANG, Shanshe, Beijing, 100871 (CN)
(74) Representative: Goddar, Heinz J.

(57) **Abstract**

A video processing method and device. The method includes: obtaining reference frame lists of a current block, where the reference frame lists of the current block include a first reference frame list and a second reference frame list; determining a target reference frame list according to the reference frame lists of the current block, where the target reference frame list is one of the first reference frame list and the second reference frame list; determining a temporal motion vector of the current block according to the target reference frame list of the current block; determining motion information of sub-blocks of the current block according to the temporal motion vector; and performing inter-frame prediction on the current block according to the motion information of the sub-blocks of the current block.

## Description

### COPYRIGHT NOTICE

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

### TECHNICAL FIELD

The present disclosure relates to the field of video encoding/decoding technologies and, more particularly, to a video processing method and device.

### BACKGROUND

A video encoding process includes an inter-frame prediction process. The modes of inter-frame prediction include a merge mode and a non-merge mode. In the merge mode, it is usually needed to construct a motion vector candidate list of the merge mode first, and select the motion vector of the current block from the motion vector candidate list of the merge mode. The current block may also be referred to as a current coding unit (CU).

With the development of coding technology, an alternative/advanced temporal motion vector prediction (ATMVP) technology has been introduced into the inter-frame prediction method. In the ATMVP technology, the current block is divided into a plurality of sub-blocks, and the motion information of the plurality of sub-blocks is calculated. The ATMVP technology aims to introduce sub-block-level motion vector prediction to improve the overall video coding performance.

The process of using ATMVP technology to find the motion information of the plurality of sub-blocks of the current block is relatively complicated, and there are some redundant operations. There is still room for improvement of the process.

### SUMMARY

The present disclosure provides a video processing method and a video processing device, to simplify encoding operations.

In a first aspect, there is provided a video processing method. The method includes: obtaining reference frame lists of a current block, where the reference frame lists of the current block include a first reference frame list and a second reference frame list; determining a target reference frame list according to the reference frame lists of the current block, where the target reference frame list is one of the first reference frame list and the second reference frame list; determining a temporal motion vector of the current block according to the target reference frame list of the current block; determining motion information of sub-blocks of the current block according to the temporal motion vector; and performing inter-frame prediction on the current block according to the motion information of the sub-blocks of the current block.

In a second aspect, there is provided a video processing device. The device includes a memory and a processor. The memory is configured to store codes. The processor is configured to execute the codes stored in the memory to: obtain reference frame lists of a current block, where the reference frame lists of the current block include a first reference frame list and a second reference frame list; determine a target reference frame list according to the reference frame lists of the current block where the target reference frame list is one of the first reference frame list and the second reference frame list; determine a temporal motion vector of the current block according to the target reference frame list of the current block; determine motion information of sub-blocks of the current block according to the temporal motion vector; and perform inter-frame prediction according to the motion information of the sub-blocks of the current block.

In a third aspect, there is provided a computer readable storage medium. The computer readable storage is configured to store instructions for executing the method provided by the first aspect.

In a fourth aspect, there is provided a computer program product. The computer program product includes instructions for executing the method provided by the first aspect.

In the present disclosure, a number of the reference frame lists which are needed to be scanned in the bidirectional prediction may be limited to simplify encoding/decoding process.

### BRIEF DESCRIPTION OF THE DRAWINGS

FIG. 1 is flow chart of a method for constructing an affine merge candidate list.
FIG. 2 is a schematic diagram showing adjacent blocks of a current block.
FIG. 3 is a flow chart of an implementation of ATMVP.
FIG. 4 is a schematic diagram showing a method for obtaining the motion information of sub-blocks of the current block.
FIG. 5 is a schematic flow chart of a video processing method consistent with an embodiment of the present disclosure.
FIG. 6 is a schematic structural diagram of a video processing device consistent with an embodiment of the present disclosure.

### DETAILED DESCRIPTION OF THE EMBODIMENTS

The various embodiments of the present disclosure can be applied to a variety of video encoding standards, such as H.264, high-efficiency video coding (HEVC), versatile video coding (VVC), audio-video coding standard (audio-video coding standard, AVS), AVS+, AVS2, or AVS3, etc.

The video encoding process mainly includes prediction, transformation, quantization, entropy encoding, loop filtering, and other parts. Prediction is an important part of mainstream video coding technology. Prediction can be divided into intra-frame prediction and inter-frame prediction. Inter-frame prediction can be realized by motion compensation. An example of the motion compensation process will be described below.

For example, a frame of an image can be divided into one or more coding regions. each coding region of the one or more coding regions may also be called a coding tree unit (CTU). The size of the CTU may be, for example, 64×64 or 128×128 (where the unit is a pixel, omitted for similar descriptions below). Each CTU can be divided into square or rectangular image blocks. Each image block may also be called a coding unit (CU), and the current CU to be encoded will be referred to as the current block in the following.

When performing inter-frame prediction on the current block, a reference frame (which may be a reconstructed frame adjacent in the temporal domain) can be searched to find a similar block of the current block to be used as the predicted block of the current block. The relative displacement between the current block and the similar block is called a motion vector (MV). The process of finding the similar block in the reference frame as the predicted block of the current block is motion compensation.

The inter-frame prediction mode includes a merge mode and a non-merge mode. In the merge mode, the motion vector (MV) of the image block is the motion vector prediction (MVP) of the image block. Therefore, for the merge mode, only the index of the MVP and the index of the reference frame need to be transmitted in the bitstream. On the other hand, for the non-merge mode, not only the indices of the MVP and the reference frame need to be transmitted in the bitstream, but also the motion vector difference (MVD) needs to be transmitted in the bitstream.

The conventional motion vector uses a simple translation model, that is, the motion vector of the current block represents the relative displacement between the current block and the reference block. This type of motion vector is difficult to accurately describe more complex motion conditions in the video, such as zoom, rotation, perspective, and so on. To be able to describe more complex motion situations, an affine model is introduced in the relevant codec standards. The affine model uses the motion vectors of two or three control points (CPs) of the current block to describe the affine motion field of the current block. When two control points are used, the two control points can be, for example, the upper left corner point and the upper right corner point of the current block. When three control points are used, the three control points can be, for example, the upper left corner point, the upper right corner point, and the lower left corner point of the current block.

The combination of the affine model with the merge mode mentioned above forms the affine merge mode. The motion vector candidate list (the merge candidate list) of the ordinary merge mode records the MVP of the image block, and the motion vector candidate list of the affine merge mode (the affine merge candidate list) records the control point motion vector prediction (CPMVP). Similar to the normal merge mode, the affine merge mode does not need to add MVD to the bitstream, but directly uses CPMVP as the CPMV of the current block.

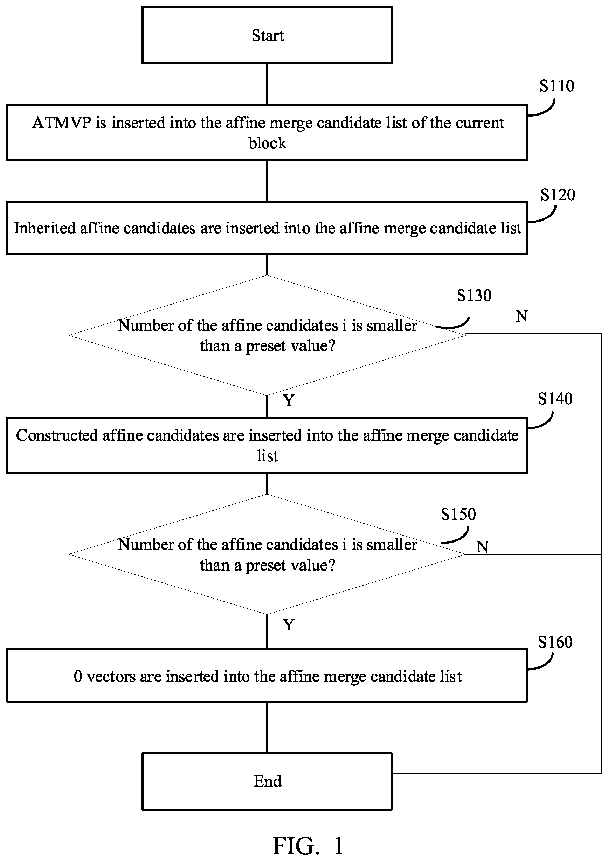

The construction of the affine merge candidate list of the current block is one of the important processes of the affine merge mode. FIG. 1 shows a possible method of constructing the affine merge candidate list.

In S110, ATMVP is inserted into the affine merge candidate list of the current block.

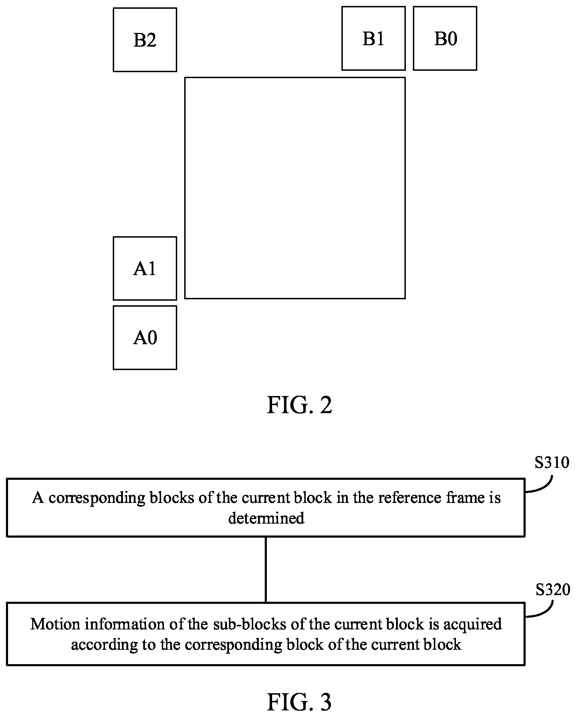

ATMVP contains the motion information of the sub-blocks of the current block. In other words, when the ATMVP technology is used, the motion information of the sub-blocks of the current block will be inserted into the affine merge candidate list, such that the affine merge mode can perform motion compensation at the sub-block level, thereby improving the overall coding performance of the video. The implementation of process S110 will be described in detail below in conjunction with FIG. 3 and will not be described in detail here.

The motion information includes one or any combination of the following information: a motion vector; motion vector difference value; a reference frame index value; a reference direction of inter-frame prediction; information of an image block using intra-frame coding or inter-frame coding; or a division mode of an image block.

In S 120, inherited affine candidates are inserted into the affine merge candidate list.

For example, as shown in FIG. 2, the surrounding blocks of the current block may be scanned in the order of A1->B1->B0->A0->B2, and then the CPMV of the surrounding blocks in the affine merge mode may be inserted into the affine merge candidate list of the current block as the affine candidates of the current block.

In S130, whether a number of the affine candidates in the affine merge candidate list is smaller than a preset value is determined.

When the number of the affine candidates in the affine merge candidate list reaches the preset value, the process in FIG. 1 is ended. When the number of the affine candidates in the affine merge candidate list is smaller than the preset value, S140 is executed.

In S140, constructed affine candidates are inserted into the affine merge candidate list.

For example, the motion information of the surrounding blocks of the current block can be combined to construct new affiliate candidates, and the constructed affiliate candidates can be inserted into the affiliate merge candidate list.

In S150, whether the number of the affine candidates in the affine merge candidate list is smaller than the preset value is determined.

When the number of the affine candidates in the affine merge candidate list reaches the preset value, the process in FIG. 1 is ended. When the number of the affine candidates in the affine merge candidate list is smaller than the preset value, S160 is executed.

In S160, 0 vectors are inserted into the affine merge candidate list.

That is, the 0 vectors are used to pad the affine merge candidate list such that the number of the affine candidates in the affine merge candidate list reaches the preset value.

The implementation of S110 in FIG. 1 will be described in detail below with reference to FIG. 3. In some embodiments, the method of inserting ATMVP into the affine merge candidate list of the current block described below may not be limited to the embodiment shown in FIG. 1 above.

As shown in FIG. 3, the implementation of the ATVMP technology, that is, the acquisition of the motion information of the sub-blocks of the current block, can roughly include S310 and S320.

In S310, a corresponding block of the current block in the reference frame is determined.

In the current ATMVP technology, a frame used to obtain motion information of the current frame (the frame where the current block is located) is called a co-located picture. The co-located frame of the current frame may be set when a slice is initialized. Taking forward prediction as an example, the first reference frame list may be a forward reference frame list or a reference frame list containing the first group of reference frames. The first group of reference frames may include reference frames whose time sequence is before and after the current frame. When the slice is initialized, the first frame in the first reference frame list of the current block may be usually set as the co-located frame of the current frame.

The corresponding block of the current block in the reference frame may be determined by a temporal motion vector (temp MV). Therefore, to obtain the corresponding block of the current block in the reference frame, the temporal motion vector needs to be derived first. The following are examples of the forward prediction and bidirectional prediction to illustrate the derivation process of the temporal motion vector.

For the forward prediction, the number of reference frame lists (also referred to as reference lists or reference image lists) of the current block may be 1. The reference frame list of the current block may be referred to as the first reference frame list (reference list 0). In one scenario, the first reference frame list may be a forward reference frame list. The co-located frame of the current frame may be usually set as the first frame in the first reference frame list.

In the process of deriving temporal motion vectors, one way to achieve this may be scanning the motion vector candidate list of the current block (the motion vector candidate list can be constructed based on the motion vectors of the image blocks at 4 adjacent positions in the spatial domain), and then using the first candidate motion vector in the motion vector candidate list as the initial temporal motion vector. Then, the first reference frame list of the current block may be scanned. When the reference frame of the first candidate motion vector is the same as the co-located frame of the current frame, the first candidate motion vector can be used as the temporal motion vector. When the reference frame of a candidate motion vector is different from the co-located frame of the current frame, the temporal motion vector may be set to a 0 vector and the scan will stop.

In this implementation, one motion vector candidate list needs to be constructed to obtain the first candidate motion vector in the list. In another implementation, the motion vector of a certain spatial neighboring block of the current block can be directly taken as the initial temporal motion vector. When the reference frame of the motion vector of the spatial neighboring block is the same as the co-located frame of the current frame, the initial temporal motion vector can be used as the temporal motion vector. Otherwise, the temporal motion vector can be set to a 0 vector, and the scan will stop. Here, the spatial neighboring block may be any one of the coded blocks around the current block. For example, it may be fixed to be the left block of the current block, or fixed to be the upper block of the current block, or fixed to be the upper left block of the current block.

For the bidirectional prediction, the number of the reference frame lists of the current block may be 2, that is, the reference frame lists may include the first reference frame list (reference list 0) and the second reference frame list (reference list 1). In one scenario, the first reference frame list may be a forward reference frame list, and the second reference frame list may be a backward reference frame list.

In the process of deriving the temporal motion vector, one implementation may be scanning the current motion vector candidate list first, and using the first candidate motion vector in the motion vector candidate list as the initial temporal motion vector. Then, one reference frame list in the current reference direction of the current block (it can be the first reference frame list or the second reference frame list) may be scanned. When the reference frame of the first candidate motion vector is the same as the co-located frame of the current frame, the first candidate motion vector can be used as the temporal motion vector. When the reference frame of the first candidate motion vector is different from the co-located frame of the current frame, one reference frame list in another reference direction of the current block may be continuously scanned. Similarly, when the reference frame of the first candidate motion vector in the reference frame list in another reference direction is the same as the co-located frame of the current frame, the first candidate motion vector can be used as the temporal motion vector. When the reference frame of the first candidate motion vector is different from the co-located frame of the current frame, the temporal motion vector can be set to a 0 vector, and the scan will stop. It should be noted that in some other embodiments, both the first reference frame list and the second reference frame list may include reference frames that are before and after the current frame in time sequence. The bidirectional prediction may refer to that the reference frames with different reference directions are selected from the first reference frame list and the second reference frame list.

In this implementation, deriving the temporal MV from ATMVP in bidirectional prediction still needs to construct the motion vector candidate list. In another implementation, the motion vector of a certain spatial neighboring block of the current block can be directly taken as the initial temporal motion vector. For bidirectional prediction, one reference frame list of the first reference frame list and the second reference frame list in the current reference direction of the current block may be scanned first. When the reference frame of the motion vector of the spatial neighboring block in the current reference direction is the same as the co-located frame of the current frame, the motion vector can be used as the temporal motion vector. Optionally, when the reference frame of the motion vector of the spatial neighboring block in the current reference direction is different from the co-located frame of the current frame, one reference frame list in another reference direction of the current block may be scanned continuously. Similarly, when the reference frame of the motion vector of the spatial neighboring block in the reference frame list in the other reference direction is the same as the co-located frame of the current frame, the motion vector of the spatial neighboring block can be used as the temporal motion vector. When the reference frame of the motion vector of the spatial neighboring block is different from the co-located frame of the current frame, the temporal motion vector can be set to a 0 vector, and the scan can be stopped. Here, the spatial neighboring block may be any of the coded blocks around the current block, such as being fixed to the left block of the current block, or fixed to the upper block of the current block, or fixed to the upper left block of the current block.

For the bidirectional prediction, the scanning order of the first reference frame list and the second reference frame list may be determined according to the following rules:
when the current frame uses a low delay coding mode and the co-located frame of the current frame is set as the first frame in the second reference frame list, the second reference frame list may be scanned first; otherwise, the first reference frame list may be scanned first.

The low delay encoding mode of the current frame can indicate that the playback sequence of the reference frames of the current frame in the video sequence is before the current frame. The co-located frame of the current frame set as the first frame in the second reference frame list may indicate that the quantization step size of the first slice of the first reference frame list of the current frame is smaller than the quantization step size of the first slice of the second reference frame list.

After the temporal motion vector is derived, the temporal motion vector can be used to find the corresponding block of the current blocks in the reference frame.

In S320, the motion information of the sub-blocks of the current block is acquired according to the corresponding block of the current block.

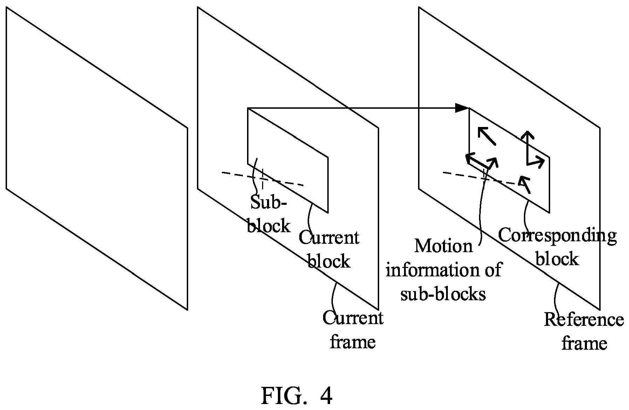

As shown in FIG. 4, the current block can be divided into the plurality of sub-blocks, and then the motion information of the plurality of sub-blocks in the corresponding block can be determined. It is worth noting that, for each sub-block of the plurality of sub-blocks, the motion information of the corresponding block can be determined by the smallest motion information storage unit in which it is located.

The motion information may include one or any combination of the following information: a motion vector; motion vector difference value; a reference frame index value; a reference direction of inter-frame prediction; information of an image block using intra-frame coding or inter-frame coding; or a division mode of an image block.

It can be seen from the implementation process of ATMVP described in FIG. 3 that for bidirectional prediction, the worst case is: in the process of deriving the temporal motion vector, both reference frame lists are scanned, and the temporal motion vector satisfying the conditions is still not derived. In this case, the scanning of the two reference frame lists is redundant.

Further, in the bidirectional prediction, when the encoding mode of the current frame is low delay B mode or a random access mode, the reference frames in the first reference frame list and the reference frames in the second reference frame list may have a certain overlap. Therefore, in the process of obtaining the temporal motion vector, there will be redundant operations in the scanning process of the two reference frame lists.

Therefore, the temporal motion vector derivation provided by the existing related technology for the bidirectional prediction is relatively complicated, and there is room for improvement.

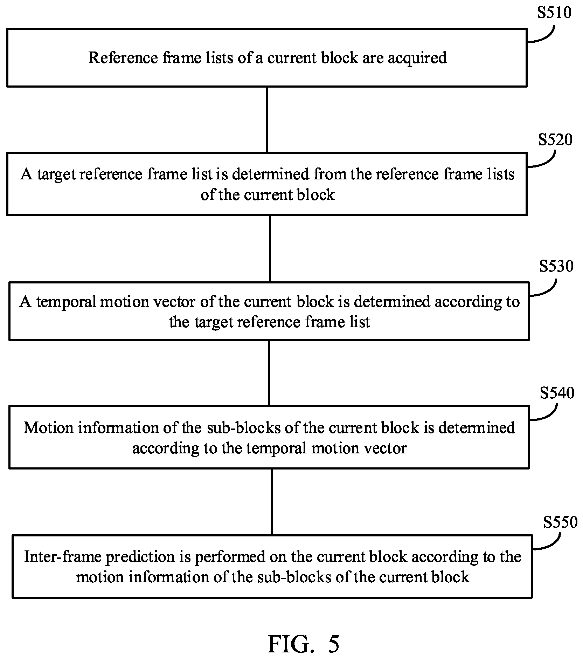

The various embodiments of the present disclosure will be described below with reference to FIG. 5.

FIG. 5 shows a video processing method provided by one embodiment of the present disclosure. The method in FIG. 5 may be applied to an encoding end or a decoding end.

In S501, reference frame lists of a current block are acquired. The reference frame lists of the current block include a first reference frame list and a second reference frame list.

The current block may be referred to as the current CU. The reference frame lists of the current block include the first reference frame list and the second reference frame list, indicating that the inter-frame bidirectional prediction needs to be executed for the current block.

Optionally, the first reference frame list may be a forward reference frame list, or a reference frame list including a first group of reference frames. The first group of reference frames may include reference frames whose time sequence is before and after the current frame.

Optionally, the second reference frame list may be a backward reference frame list, or a reference frame list that includes a second group of reference frames, and the second group of reference frames may include reference frames whose time sequence before and after the current frame.

It should be noted that, in some other embodiments, both the first reference frame list and the second reference frame list may include reference frames that are before and after the current frame in time sequence, and the bidirectional prediction may refer to that the reference frames with different reference directions are selected from the first reference frame list and the second reference frame list.

In S520, a target reference frame list is determined from the reference frame lists of the current block.

The target reference frame list may be one of the first reference frame list and the second reference frame list. The target reference frame list may be selected randomly or according to certain rules. For example, in one embodiment, the target reference frame may be selected according to the following rules: if the current frame where the current block is located uses the low delay coding mode and the co-located frame of the current frame is the first frame in the second reference frame list, the second reference frame list is determined as the target reference Frame list; and/or if the current frame where the current block is located does not use the low delay encoding mode or the co-located frame of the current frame is not the first frame in the second reference frame list, the first reference frame list is determined as the target reference frame list.

In S530, a temporal motion vector of the current block is determined according to the target reference frame list.

In the bidirectional prediction, the present embodiment of the present disclosure may determine the temporal motion vector of the current block according to one of the first reference frame list and the second reference frame list. That is, regardless of whether the temporal motion vector can be derived from the target reference frame list, the scan may stop after the target reference frame list is scanned. In other words, the temporal motion vector of the current block can be determined only according to the target reference frame list.

For example, a first candidate motion vector may be selected first from the current motion vector candidate list (the motion vector candidate list can be constructed based on the motion vectors of the image blocks at four adjacent positions in the spatial domain); and the reference frame of the first candidate motion vector may be found from the target reference frame list. Wen the reference frame of the first candidate motion vector is the same as the co-located frame of the current block, the first candidate motion vector can be determined as the temporal motion vector. When the reference frame of the first candidate motion vector is different from the co-located frame of the current block, the scan may be also stopped instead of continuing to scan another reference frame list of the current block as described in the method in FIG. 3. In this case, the 0 vector can be used as the temporal motion vector of the current block.

In S540, the motion information of the sub-blocks of the current block is determined according to the temporal motion vector.

For example, in one embodiment, the corresponding block of the current block in the reference frame can be determined according to the temporal motion vector. Then, the motion information of the sub-blocks of the current block can be determined according to the corresponding block of the current block in the reference frame. The motion information may include one or any combination of the following information: a motion vector; motion vector difference value; a reference frame index value; a reference direction of inter-frame prediction; information of an image block using intra-frame coding or inter-frame coding; or a division mode of an image block. S540 can be implemented with reference to S320 above, which will not be described in detail here.

In S550, the inter-frame prediction is performed on the current block according to the motion information of the sub-blocks of the current block.

In one embodiment, S550 may include: performing the inter-frame prediction according to the motion information of the sub-blocks of the current block by using the sub-blocks of the current block as units.

For example, in one embodiment, the motion information of the sub-blocks of the current block can be inserted as ATMVP into the affine merge candidates list of the current block as shown in FIG. 1, and then a complete affine merge candidate list can be constructed according to S120 to S160 in FIG. 1. Then, the candidate motion vector in the affine merge candidates list can be used to perform the inter-frame prediction on the current block to determine the optimal candidate motion vector. The detailed implementation of S550 can be performed with reference to related technologies, which is not limited in the embodiments of the present disclosure.

In the present disclosure, the operation of the encoding/decoding ends may be simplified by limiting the number of reference frame lists that need to be scanned in the bidirectional prediction process.

It can be understood that when the method in FIG. 5 is applied to the encoding end and the decoding end, the inter-frame prediction process for the current block described in process S550 will be different. For example, when the method in FIG. 5 is applied to the encoding end, performing inter-frame prediction on the current block may include: determining the predicted block of the current block; calculating the residual block of the current block according to the original block and the predicted block of the current block. As another example, when the method of FIG. 5 is applied to the decoding end, performing inter-frame prediction on the current block may include: determining the predicted block and residual block of the current block; calculating the reconstructed block of the current block according to the predicted block and residual block of the current block.

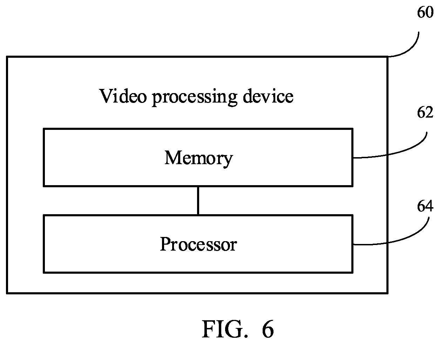

The method embodiments of the present disclosure are described in detail above with reference to FIG. 1 to FIG. 5. The device embodiments of the present disclosure will be described in detail below with reference to FIG. 6. It should be understood that the description of the method embodiments and the description of the device embodiments correspond to each other, and therefore, for the parts that are not described in detail, reference can be made to the previous method embodiments.

FIG. 6 is a schematic structural diagram of a video processing device provided by embodiments of the present disclosure. As shown in FIG. 6, the video processing device 60 includes a memory 62 and a processor 64.

The memory 62 is configured to store codes.

The processor 64 is configured to execute the codes stored in the memory 62, to: obtain reference frame lists of a current block, where the reference frame lists of the current block include a first reference frame list and a second reference frame list; determine a target reference frame list according to the reference frame lists of the current block where the target reference frame list is one of the first reference frame list and the second reference frame list; determine a temporal motion vector of the current block according to the target reference frame list of the current block; determine motion information of sub-blocks of the current block according to the temporal motion vector; and perform inter-frame prediction according to the motion information of the sub-blocks of the current block.

Optionally, determining the motion information of the sub-blocks of the current block according to the temporal motion vector may include: determining a corresponding block of the current block in the reference frame according to the temporal motion vector; and determining the motion information of the sub-blocks of the current block according to the corresponding block of the current block in the reference frame.

Optionally, determining the target reference frame list according to the reference frame lists of the current block may include: when the current frame where the current block is located uses the low delay coding mode and the co-located frame of the current frame is the first frame in the second reference frame list, determining the second reference frame list as the target reference Frame list; and/or when the current frame where the current block is located does not use the low delay encoding mode or the co-located frame of the current frame is not the first frame in the second reference frame list, determining the first reference frame list as the target reference frame list.

Optionally, the first reference frame list may be a forward reference frame list, or a reference frame list including a first group of reference frames. The first group of reference frames may include reference frames whose time sequence is before and after the current frame.

Optionally, the second reference frame list may be a backward reference frame list, or a reference frame list that includes a second group of reference frames, and the second group of reference frames may include reference frames whose time sequence before and after the current frame.

It should be noted that, in some other embodiments, both the first reference frame list and the second reference frame list may include reference frames that are before and after the current frame in time sequence, and the bidirectional prediction may refer to that the reference frames with different reference directions are selected from the first reference frame list and the second reference frame list.

Optionally, determining the temporal motion vector of the current block according to the target reference frame list of the current block may include: selecting the first candidate motion vector from the current motion vector candidate list; finding the reference frame of the first candidate motion vector in the target reference frame list; and when the reference frame of the first candidate motion vector is the same as the co-located frame of the current block, determining the first candidate motion vector as the temporal motion vector.

Optionally, determining the temporal motion vector of the current block according to the target reference frame list of the current block may further include: when the reference frame of the first candidate motion vector is different from the co-located frame of the current block , determining the temporal motion vector to be a 0 vector.

Optionally, performing the inter-frame prediction on the current block may include: determining a predicted block of the current block; and calculating a residual block of the current block according to the original block and the predicted block of the current block.

Optionally, performing the inter-frame prediction on the current block may include: determining a predicted block and a residual block of the current block; and calculating the reconstructed block of the current block according to the predicted block and the residual block of the current block.

Optionally, performing the inter-frame prediction on the current block according to the motion information of the sub-block of the current block may include: taking the sub-block of the current block as units according to the motion information of the sub-block of the current block to perform the inter-frame prediction.

The above-mentioned embodiments may be implemented in whole or in part by software, hardware, firmware or any other combination. When implemented by software, the above embodiments can be implemented in the form of a computer program product in whole or in part. The computer program product may include one or more computer instructions. When the one or more computer program instructions are loaded and executed on the computer, the processes or functions described in the embodiments of the present disclosure are performed in whole or in part. The computer may be a general-purpose computer, a special-purpose computer, a computer network, or another programmable device. The computer program instructions may be stored in a computer-readable storage medium or transmitted from one computer-readable storage medium to another computer-readable storage medium. For example, the computer instructions may be transmitted from a website, a computer, a server, or a data center, to another website, computer, server or data center via wired (such as coaxial cable, optical fiber, digital subscriber line (DSL)) or wireless (such as infrared, wireless, microwave, etc.) manners. The computer-readable storage medium may be any available medium that can be accessed by a computer or a data storage device such as a server or data center integrated with one or more available media. The usable medium may be a magnetic medium (for example, a floppy disk, a hard disk, a magnetic tape), an optical medium (for example, a digital video disc (DVD)), or a semiconductor medium (for example, a solid state disk (SSD)), etc.

A person of ordinary skill in the art may realize that the units and algorithm steps of the examples described in combination with the embodiments disclosed herein can be implemented by electronic hardware or a combination of computer software and electronic hardware. Whether these functions are executed by hardware or software depends on the specific application and design constraint conditions of the technical solution. Persons of ordinary skill in the art can use different methods for each specific application to implement the described functions, but such implementation should not be considered beyond the scope of the present disclosure.

In the various embodiments provided in the present disclosure, it should be understood that the disclosed system, device, and method may be implemented in other ways. For example, the device embodiments described above are only illustrative. For example, the division of the units is only a logical function division, and there may be other divisions in actual implementation. For example, multiple units or components can be combined or may be integrated into another system, or some features can be ignored or not implemented. In addition, the displayed or discussed mutual coupling or direct coupling or communication connection may be indirect coupling or communication connection through some interfaces, devices or units, and may be in electrical, mechanical or other forms.

The units described as separate components may or may not be physically separated, and the components displayed as units may or may not be physical units. That is, they may be located in one place, or they may be distributed on multiple network units. Some or all of the units may be selected according to actual needs to achieve the objectives of the solutions of the embodiments.

In addition, the functional units in the various embodiments of the present disclosure may be integrated into one processing unit, or each unit may exist alone physically, or two or more units may be integrated into one unit.

The above are only specific implementations of embodiments of the present disclosure, but the scope of the present disclosure is not limited to this. Anyone familiar with the technical field can easily think of various modifications or replacements within the technical scope disclosed in the present disclosure. These modifications or replacements shall be covered within the scope of protection of the present disclosure. Therefore, the protection scope of the present disclosure shall be subject to the protection scope of the claims.

Various embodiments have been described. The present invention may also (alternatively) be described by the below numbered aspects 1 to 22.

Aspect 1 relates to a video processing method, comprising:
obtaining reference frame lists of a current block, wherein the reference frame lists of the current block include a first reference frame list and a second reference frame list; determining a target reference frame list according to the reference frame lists of the current block, wherein the target reference frame list is one of the first reference frame list and the second reference frame list; determining a temporal motion vector of the current block according to the target reference frame list of the current block; determining motion information of sub-blocks of the current block according to the temporal motion vector; performing inter-frame prediction on the current block according to the motion information of the sub-blocks of the current block.

Aspect 2 relates to the method according to Aspect 1, wherein determining the motion information of the sub-blocks of the current block according to the temporal motion vector includes: determining a corresponding block of the current block in the reference frame according to the temporal motion vector; determining the motion information of the sub-blocks of the current block according to the corresponding block of the current block in the reference frame.

Aspect 3 relates to the method according to Aspect 1 or 2, wherein determining the target reference frame list according to the reference frame lists of the current block includes: when the current frame where the current block is located uses a low delay coding mode and a co-located frame of the current frame is a first frame in the second reference frame list, determining the second reference frame list as the target reference Frame list; and/or when the current frame where the current block is located does not use the low delay encoding mode or the co-located frame of the current frame is not the first frame in the second reference frame list, determining the first reference frame list as the target reference frame list.

Aspect 4 relates to the according to any of Aspects 1 to 3, wherein determining the temporal motion vector of the current block according to the target reference frame list of the current block includes: selecting a first candidate motion vector from the current motion vector candidate list; finding the reference frame of the first candidate motion vector in the target reference frame list; when the reference frame of the first candidate motion vector is the same as the co-located frame of the current block, determining the first candidate motion vector as the temporal motion vector.

Aspect 5 relates to the according to Aspect 4, wherein: determining the temporal motion vector of the current block according to the target reference frame list of the current block further includes: when the reference frame of the first candidate motion vector is different from the co-located frame of the current block, determining the temporal motion vector to be a 0 vector.

Aspect 6 relates to the method according to any of Aspects1 to 3, wherein determining the temporal motion vector of the current block according to the target reference frame list of the current block includes: determining a motion vector of a spatial neighboring block of the current block at a specific position; when a reference frame of the motion vector of the spatial neighboring block is the same as the co-located frame of the current block, determining the motion vector of the spatial neighboring block as the temporal motion vector.

Aspect 7 relates to the method according to Aspect 6, wherein: the spatial neighboring block of the current block at the specific position is a block on a left side of the current block, or a block on an upper side of the current block, or a block on an upper left side of the current block.

Aspect 8 relates to the method according to Aspect 6, wherein: when the reference frame of the motion vector of the spatial neighboring block is different from the co-located frame of the current block, determining a 0 vector as the temporal motion vector.

Aspect 9 relates to the method according to any of Aspects1 to 8, wherein performing the inter-frame prediction on the current block includes: determining a predicted block of the current block; and calculating a residual block of the current block according to the original block and the predicted block of the current block.

Aspect 10 relates to the method according to any of Aspects1 to 8, wherein performing the inter-frame prediction on the current block includes: determining a predicted block and a residual block of the current block; and calculating a reconstructed block of the current block according to the predicted block and the residual block of the current block.

Aspect 11 relates to the method according to any of Aspects1 to 10, wherein performing the inter-frame prediction on the current block according to the motion information of the sub-block of the current block includes: taking the sub-blocks of the current block as units according to the motion information of the sub-block of the current block to perform the inter-frame prediction.

Aspect 12 relates to a video processing device, comprising: a memory configured to store codes; and a processor, configured to execute the codes stored in the memory to: obtain reference frame lists of a current block, wherein the reference frame lists of the current block include a first reference frame list and a second reference frame list; determine a target reference frame list according to the reference frame lists of the current block wherein the target reference frame list is one of the first reference frame list and the second reference frame list; determine a temporal motion vector of the current block according to the target reference frame list of the current block; determine motion information of sub-blocks of the current block according to the temporal motion vector; perform inter-frame prediction according to the motion information of the sub-blocks of the current block.

Aspect 13 relates to the device according to Aspect 12, wherein determining the motion information of the sub-blocks of the current block according to the temporal motion vector includes: determining a corresponding block of the current block in the reference frame according to the temporal motion vector; determining the motion information of the sub-blocks of the current block according to the corresponding block of the current block in the reference frame.

Aspect 14 relates to the device according to Aspect 12 or 13, wherein determining the target reference frame list according to the reference frame lists of the current block includes: when the current frame where the current block is located uses the low delay coding mode and the co-located frame of the current frame is the first frame in the second reference frame list, determining the second reference frame list as the target reference Frame list; and/or when the current frame where the current block is located does not use the low delay encoding mode or the co-located frame of the current frame is not the first frame in the second reference frame list, determining the first reference frame list as the target reference frame list.

Aspect 15 relates to the device according to any of Aspects 12 to 14, wherein determining the temporal motion vector of the current block according to the target reference frame list of the current block includes: selecting the first candidate motion vector from the current motion vector candidate list; finding the reference frame of the first candidate motion vector in the target reference frame list; when the reference frame of the first candidate motion vector is the same as the co-located frame of the current block, determining the first candidate motion vector as the temporal motion vector.

Aspect 16 relates to the device according to Aspect 15, wherein: determining the temporal motion vector of the current block according to the target reference frame list of the current block further includes: when the reference frame of the first candidate motion vector is different from the co-located frame of the current block, determining the temporal motion vector to be a 0 vector.

Aspect 17 relates to the device according to any of Aspects 12 to 14, wherein determining the temporal motion vector of the current block according to the target reference frame list of the current block includes: determining a motion vector of a spatial neighboring block of the current block at a specific position; when a reference frame of the motion vector of the spatial neighboring block is the same as the co-located frame of the current block, determining the motion vector of the spatial neighboring block as the temporal motion vector.

Aspect 18 relates to the device according to Aspect 17, wherein: the spatial neighboring block of the current block at the specific position is a block on a left side of the current block, or a block on an upper side of the current block, or a block on an upper left side of the current block.

Aspect 19 relates to the device according to Aspect 17, wherein: when the reference frame of the motion vector of the spatial neighboring block is different from the co-located frame of the current block, determining a 0 vector as the temporal motion vector.

Aspect 20 relates to the device according to any of Aspects 12 to 19, wherein performing the inter-frame prediction on the current block includes: determining a predicted block of the current block; and calculating a residual block of the current block according to the original block and the predicted block of the current block.

Aspect 21 relates to the device according to any of Aspects 12 to 19, wherein performing the inter-frame prediction on the current block includes: determining a predicted block and a residual block of the current block; and calculating a reconstructed block of the current block according to the predicted block and the residual block of the current block.

Aspect 22 relates to the device according to any of Aspects 12 to 21, wherein performing the inter-frame prediction on the current block according to the motion information of the sub-block of the current block includes: taking the sub-blocks of the current block as units according to the motion information of the sub-block of the current block to perform the inter-frame prediction.

## Claims

1. A video processing method, comprising:
obtaining reference frame lists of a current block, wherein the reference frame lists of the current block include a first reference frame list and a second reference frame list indicating inter-frame bidirectional prediction for the current block, wherein each of the first reference frame list and the second reference frame list include reference frames that are before and after the current frame in time sequence;
scanning the first reference frame list in a current reference direction of the current block;
when the reference frame of the motion vector of a spatial neighboring block in the current reference direction is the same as the co-located frame of the current frame, using the motion vector as the temporal motion vector;
when the reference frame of the motion vector of the spatial neighboring block in the current reference direction is different from the co-located frame of the current frame, scanning the second reference frame list in another reference direction of the current block;
determining a corresponding block of the current blocks in the reference frame by using the temporal motion vector;
obtaining motion information of sub-blocks of the current block according to the corresponding block of the current block;
performing inter-frame bidirectional prediction on the current block according to the motion information of the sub-blocks of the current block.

2. The method according to claim 1, wherein determining the motion information of the sub-blocks of the current block according to the temporal motion vector includes:
determining a corresponding block of the current block in the reference frame according to the temporal motion vector;
determining the motion information of the sub-blocks of the current block according to the corresponding block of the current block in the reference frame.

3. The method according to claim 1 or 2, wherein determining a target reference frame list according to the reference frame lists of the current block includes:
when the current frame where the current block is located uses a low delay coding mode and a co-located frame of the current frame is a first frame in the second reference frame list, determining the second reference frame list as the target reference frame list; and/or
when the current frame where the current block is located does not use the low delay encoding mode or the co-located frame of the current frame is not the first frame in the second reference frame list, determining the first reference frame list as the target reference frame list;
wherein the target reference frame list is one of the first reference frame list and the second reference frame list.

4. The method according to any of claims 1 to 3, wherein determining the temporal motion vector of the current block according to the target reference frame list of the current block includes:
determining a motion vector of a spatial neighboring block of the current block at a specific position;
when a reference frame of the motion vector of the spatial neighboring block is the same as the co-located frame of the current block, determining the motion vector of the spatial neighboring block as the temporal motion vector.

5. The method according to claim 4, wherein:
the spatial neighboring block of the current block at the specific position is a block on a left side of the current block, or a block on an upper side of the current block, or a block on an upper left side of the current block.

6. The method according to claim 4, wherein:
when the reference frame of the motion vector of the spatial neighboring block is different from the co-located frame of the current block, determining a 0 vector as the temporal motion vector.

7. The method according to any of claims 1 to 6, wherein performing the inter-frame bidirectional prediction on the current block includes: determining a predicted block of the current block; and calculating a residual block of the current block according to the original block and the predicted block of the current block.

8. The method according to any of claims 1 to 6, wherein performing the inter-frame bidirectional prediction on the current block includes: determining a predicted block and a residual block of the current block; and calculating a reconstructed block of the current block according to the predicted block and the residual block of the current block.

9. The method according to any of claims 1 to 8, wherein performing the inter-frame bidirectional prediction on the current block according to the motion information of the sub-block of the current block includes: taking the sub-blocks of the current block as units according to the motion information of the sub-block of the current block to perform the inter-frame bidirectional prediction.

10. A video processing device, comprising:
a memory configured to store codes; and
a processor, configured to execute the codes stored in the memory to:
obtain reference frame lists of a current block, wherein the reference frame lists of the current block include a first reference frame list and a second reference frame list indicating inter-frame bidirectional prediction for the current block, wherein each of the first reference frame list and the second reference frame list include reference frames that are before and after the current frame in time sequence;
scan the first reference frame list in a current reference direction of the current block;
when the reference frame of the motion vector of a spatial neighboring block in the current reference direction is the same as the co-located frame of the current frame, use the motion vector as the temporal motion vector;
when the reference frame of the motion vector of the spatial neighboring block in the current reference direction is different from the co-located frame of the current frame, scan the second reference frame list in another reference direction of the current block;
determine a corresponding block of the current blocks in the reference frame by using the temporal motion vector;
obtain motion information of sub-blocks of the current block according to the corresponding block of the current block;
perform inter-frame bidirectional prediction on the current block according to the motion information of the sub-blocks of the current block.

11. The method according to claim 10, wherein the processor is configured to execute the codes stored in the memory to determine the motion information of the sub-blocks of the current block according to the temporal motion vector by:
determining a corresponding block of the current block in the reference frame according to the temporal motion vector;
determining the motion information of the sub-blocks of the current block according to the corresponding block of the current block in the reference frame.

12. The method according to claim 10 or 11, wherein the processor is configured to execute the codes stored in the memory to determine a target reference frame list according to the reference frame lists of the current block by:
when the current frame where the current block is located uses a low delay coding mode and a co-located frame of the current frame is a first frame in the second reference frame list, determining the second reference frame list as the target reference frame list; and/or
when the current frame where the current block is located does not use the low delay encoding mode or the co-located frame of the current frame is not the first frame in the second reference frame list, determining the first reference frame list as the target reference frame list;
wherein the target reference frame list is one of the first reference frame list and the second reference frame list.

13. The method according to any of claims 10 to 12, wherein the processor is configured to execute the codes stored in the memory to determine the temporal motion vector of the current block according to the target reference frame list of the current block by:
determining a motion vector of a spatial neighboring block of the current block at a specific position;
when a reference frame of the motion vector of the spatial neighboring block is the same as the co-located frame of the current block, determining the motion vector of the spatial neighboring block as the temporal motion vector.

14. The method according to claim 13, wherein:
the spatial neighboring block of the current block at the specific position is a block on a left side of the current block, or a block on an upper side of the current block, or a block on an upper left side of the current block.

15. The method according to claim 13, wherein the processor is configured to execute the codes stored in the memory to:
when the reference frame of the motion vector of the spatial neighboring block is different from the co-located frame of the current block, determine a 0 vector as the temporal motion vector.
